# EUROPÄISCHE PATENTSCHRIFT

(11) **EP 1 798 150 B1**
(45) Veröffentlichungstag und Bekanntmachung des Hinweises auf die Patenterteilung: **15.10.2008**
(21) Anmeldenummer: 06025680.7
(22) Anmeldetag: 12.12.2006
(51) Int. Cl.: B65B 61/20, B65D 5/42, B65G 1/137

(54) **Lageranordnung und eine Verpackung für Holzwerkstoff-Paneele**
Storage system and package for panels in wooden material
Installation de stockage ainsi que l'emballage pour des panneaux en matériau en bois

(30) Priorität: 16.12.2005 DE 102005060755
(43) Veröffentlichungstag der Anmeldung: 20.06.2007
(73) Patentinhaber: Kronotec AG, 6006 Luzern (CH)
(72) Erfinder:
(74) Vertreter: Wenzel & Kalkoff

(56) Entgegenhaltungen:
- EP-A1- 0 494 014
- FR-A- 2 418 163
- FR-A- 2 714 823

## Beschreibung

Die Erfindung betrifft eine Lageranordnung und eine Verpackung für Holzwerkstoff-Paneele.

HolzWerkstoff-Paneele werden zu einem erheblichen Teil durch die Hersteller unter deren Hersteller-Marken vertrieben. Ein weiterer, nicht unbeträchtlicher Teil der Produktion wird im Auftrag Dritter hergestellt, die die Paneele unter eigener Kunden-Marke vertreiben wollen. Die Lagerhaltung der Paneele erfolgt zu einem erheblichen Teil beim Hersteller, sowohl unter Hersteller-Marke als auch unter Kunden-Marke vertriebene Paneele werden in einzelnen Lieferungen abgerufen.

Bisher erfolgt die Lagerhaltung in der Weise, dass die Paneele im Anschluss an Profilierung und Oberflächengestaltung in die jeweilige Hersteller- oder Kunden-spezifische Verpackung verpackt und in ein Auslieferungslager überstellt wird. Diese Anordnung von Produktion und Lager hat lange Zeit funktioniert. Sie wird aber dadurch erschwert, dass die Vielfalt der Oberflächen und die zunehmende Differenzierung des Sortiments (Schiffsboden-Parkett, Landhaus-Dielen, Paneele mit Trittschalldämmung und ohne Trittschalldämmung, Paneele mit Oberflächenbeschichtungen unterschiedlicher Verschleißfestigkeit usw.) die Lager exponentiell beanspruchen.

Es ist daher Aufgabe der vorliegenden Erfindung, eine Lageranordnung und eine Produktverpackung bereitzustellen, die den vorstehend geschilderten Anforderungen an die Lagerhaltung besser gerecht wird.

Diese Aufgabe wird gelöst mit einer Lageranordnung mit einem ersten Lager, das Kartons aufnimmt, die eine vorgegebene Anzahl von Holzwerkstoff Paneelen mindestens teilweise umschließen, einem zweiten Lager, dass Einleger aufnimmt, die zum Anbringen auf den Kartons bestimmt sind, Mitteln zum Fördern, die jeweils das erste und das zweite Lager mit einem Ort zum Konfektionieren der Kartons verbinden und mit Mitteln zum Steuern und Mittel zum Fördern der Einleger und der Kartons, die so ausgelegt sind, dass sie im Betriebszustand für einzelne Kundenaufträge die Einleger und die Kartons und Einleger so steuern, dass bedruckte Einleger auf vorgegebene Kartons aufgebracht werden und die mit bedruckten Einlegern versehenen Kartons an dem Ort zum Konfektionieren nach den Vorgaben des Kundenauftrags zusammengestellt werden.

Bei dieser Form der Lageranordnung können Kunden auch bedruckte Einleger zur Verfügung steilen, die dann dem jeweiligen Lagerort entnommen werden und die mit dem zu kennzeichnenden Karton zusammengeführt werden, wenn eine Lieferung zu kommissionieren ist.

Nach einer besonders vorteilhaften Ausführung umfasst die Erfindung auch eine Lageranordnung mit einem ersten Lager, das Kartons aufnimmt, die eine vorgegebene Anzahl von Holzwerkstoff-Paneelen mindestens teilweise umschließen, einem zweiten Lager, dass Einleger aufnimmt, die zum Anbringen auf den Kartons bestimmt sind, Mitteln zum Bedrucken der Einleger, Mitteln zum Fördern, die jeweils das erste und das zweite Lager mit einem Ort zum Konfektionieren der Kartons verbinden und mit Mitteln zum Steuern der Mittel zum Bedrucken der Einleger und der Mittel zum Fördern, die so ausgelegt sind, dass sie im Betriebszustand für einzelne Kundenaufträge die Mittel zum Bedrucken der Einleger und die Mittel zum Fördern von Kartons und Einlegern so steuern, dass bedruckte Einleger auf vorgegebene Kartons aufgebracht werden und die mit bedruckten Einlegern versehenen Kartons an dem Ort zum Konfektionieren nach den Vorgaben des Kundenauftrags zusammengestellt werden.

Das erste Lager nimmt erfindungsgemäß nur neutrale Verpakkungen auf, für die noch nicht festgelegt ist, ob sie mit Hersteller-Marken oder mit Kunden-Marken versehen werden. Das erste Lager ist also ausschließlich nach Produktqualität sortiert. Die bisher erforderliche, zusätzliche Aufteilung nach Paneel-Verpakkungen, die unter Hersteller-Marken oder unter Kunden-Marken vertrieben werden sollen, entfällt hier. Es hat sich herausgestellt, daß Kunden davon überzeugt werden konnten, einheitliche Verpackungen zu akzeptieren, die lediglich mit individualisierten Einlegern versehen sind. Da die erfindungsgemäße Lageranordnung für gleiche Waren gedacht ist, die von verschiedenen Anbietern unter eigener, individualisierter Präsentation vertrieben wird, ist das Aktzeptieren einer standardisierten, neutralen Verpackung wesentliche Voraussetzung für die praktische Umsetzung der erfindungsgemäßen Lageranordnung.

Das zweite Lager ist sehr klein und platzsparend. Es nimmt die Einleger auf, die in bedruckter oder in neutraler, unbedruckter Form gelagert werden. Die Einleger werden erst unmittelbar vor oder beim Konfektionieren der Lieferung auf dem Karton angebracht, nachdem sie ggf. unmittelbar vorher bedruck wurden. Die Einleger wie Produkthinweise oder Verlegeanleitungen, werden nach Kundenvorgaben individuell gestaltet. Sie nehmen z.B. Sachangaben ebenso auf wie werbende oder gestalterische Angaben.

Die Mittel zum Fördern der Kartons zum Ort des Konfektionierens, die Mittel zum Bedrucken und die Mittel zum Steuern der Lageranordnung unterscheiden sich in der technischen Ausstattung nicht sehr von bekannter Ausstattung. Der Unterschied liegt in den Anordnung dieser Komponenten.

Nach dem Stand der Technik sind die Mittel zum Fördern als individuelle Mittel zum Fördern, beispielsweise als mit Fahrern besetzte oder fahrerlose Fahrzeuge, aber auch als gebundene Fördermittel, beispielsweise als Förderbänder, Lifte, Rollen- oder Röllchengänge ausgelegt. Dies ist auch bei der vorliegenden Erfindung der Fall. Bisher wurden jedoch durchgängig -vom Eingang in das Lager bis zum Verlassen der Konfektionierung- bereits individualisierte Verpackungen gefördert. Erfindungsgemäß werden bis zum Ort des Konfektionierens neutrale Verpackungen gefördert.

Während nach dem Stand der Technik die Mittel zum Bedrucken zwar überwiegend zum Bedrucken von Kartons ausgelegt waren, ist das Bedrucken von Einlegern an sich durchaus bekannt. Die Mittel zum Bedrucken sind aber nach dem Stand der Technik vor dem Zugang zum Lager der verpackten Holzwerkstoff-Paneele angeordnet, während sie erfindungsgemäß nach diesem Lager und vor oder am Ort des Konfektionierens angeordnet sind.

Die Mittel zum Steuern der Lageranordnung sind nach dem Stand der Technik nicht dazu ausgelegt, neutrale Verpackungen zu individualisieren. Die bekannten Mittel zum Steuern einer Lageranordnung, übliche Rechner, die den Zugang zum Lager erfassen, Lagerorte auswählen und registrieren und Lieferaufträge abwickeln, indem sie Mittel zum Fördern so steuern, dass die gewünschten Verpackungseinheiten am Lagerort entnommen und ohne weitere Manipulation am Warenausgang bzw. Versand zu den gewünschten Lieferungen zusammengestellt werden.

Nach der erfindungsgemäßen Lageranordnung sind die Mittel zum Steuern für weitere Tätigkeiten ausgelegt, was technisch ohne Änderung der Hardware, allein mit einer Anpassung der Software durchzuführen ist. Die Mittel zum Steuern übernehmen aus der Produktion neutrale Verpackungskartons in das erste Lager und lagern sie dort. Sie übernehmen neutrale Einleger (eine Sorte oder mehrere, je nach den Anforderungen an die Verpackung) in das zweite Lager. Sie steuern bei Eingang eines Auftrags die Mittel zum Fördern so, dass die gewünschte Verpackung, die beispielsweise nach Oberflächen- und Profilgestaltung der darin enthaltenen Paneele identifiziert ist, zum Ort des Konfektionierens gefördert wird. Die Mittel zum Steuern steuern weiter, dass ein Einleger nach den Spezifikationen des jeweiligen Auftrags dem zweiten Lager entnommen, durch die Mittel zum Drucken individuell bedruckt und dann am Ort des Konfektionierens auf dem bis dahin neutralen Karton für Holzwerkstoff-Paneele angebracht wird. Der individualisierte Karton mit Holzkwerkstoff-Paneelen verlässt den Ort des Konfektionierens entweder in ein Fertigwaren-Lager oder -was bevorzugt wird- unmittelbar zu einer Verlade-Station.

Es wird deutlich, dass ohne große Veränderung vorhandener Lageranordnungen eine weitaus kostengünstigere und wirtschaftlichere Lagerhaltung für Kartons mit Holzwerkstoff-Paneelen entwickelt wurde. Eine veränderte Anordnung der Mittel zum Drucken und veränderte Mittel zum Steuern der Lageranordnung genügen, um die Lagerhaltung effizienter zu gestalten. Trotz der auf den ersten Blick einfachen technischen Maßnahmen resultieren aus der veränderten Anordnung des Lagers beträchtliche wirtschaftliche Vorteile, insbesondere für den Teil des Sortiments, der zwar vorgehalten werden muss, dessen Umschlagsfrequenz aber sehr gering sind, weil es sich z. b. um weniger nachgefragte Oberflächen oder seltener verwendete Ausführungsformen (Trittschalldämmung, strapazierfähige Oberflächen, leitfähige Oberflächen, Hochglanz-Oberflächen, seltene Dekore) handelt. Kann für diese Teile des Sortiments der Übergang vom Lagern individualisierter Verpackung auf neutrale Verpackung vollzogen werden, gestaltet sich die Lagerhaltung um ein Vielfaches platz- und damit kostensparender.

Die Einleger, die die Verpackung der Holzwerkstoff Paneele jetzt erst beim Verlassen des ersten Lagers individualisieren, können vielfältig gestaltet sein. Sie können zum Aufkleben, aufheften oder als Banderole für den Karton gestaltet sein. Sie können so gestaltet sein, dass sie auf den Karton aufgelegt und dann mit einer Kunststoffhülle fixiert werden, die den Karton ganz oder teilweise umschließt.

Nach einer bevorzugten Ausführungsform wird der Einleger so bedruckt und am Ort des Konfektionierens so angeordnet, das ein erster Abschnitt des Einlegers die Stirnseite des Kartons mindestens abschnittsweise überdeckt, während ein zweiter Abschnitt des Einlegers eine Oberseite des Kartons mindestens abschnittweise überdeckt. Bei der Lagerung im Verkaufsregal sind Produktinformationen so zuverlässig auf Stirn- und Oberseite des Kartons erkennbar.

Bekannte Verpackungen für Holzwerkstoff-Paneele sind sehr unterschiedlich gestaltet. Holzwerkstoff-Panede werden abschnittweise in Karton verpackt oder in Kunststoff-Folien eingeschweißt. Eine vorteilhafte Ausführungsform der Erfindung sieht vor, dass der Karton, ggf. mit mindestens einem Ausschnitt die Paneele vollständig umschließt. Der individualisierende Einleger wird dann vor Auslieferung auf dem Karton angebracht und ggf. wird der Karton ganz oder teilweise von einer Kunststoff-Folie umhüllt.

Der Karton eignet sich deshalb für den Einsatz in der erfindungsgemäßen Lageranordnung besonders, weil er einerseits preiswert, stabil und einfach einzusetzen ist. Zum anderen vermittelt er durch seine Oberflächengestaltung ohne weiteres auch eine hochwertige Anmutung, wenn dies gewünscht wird. Die Kartons können gut in dem ersten Lager aufbewahrt werden. Der Nachteil, dass das Holzwerkstoff-Paneel im Karton verdeckt ist, kann einfach dadurch behoben werden, dass Karton-Zuschnitte verwendet werden, die mit mindestens einem Ausschnitt versehen sind, der einen Blick auf die Oberfläche der verpackten Paneele ermöglicht. Diese Gestaltung des Kartons trägt ebenfalls zu einer hochwertigen Anmutung der Verpackung bei. Vorzugsweise umhüllt der Karton die Paneele vollständig. Es ist aber auch vorstellbar, dass mehrteilige Kartonverpackungen eingesetzt sind, z. B. Endkappen und/oder Banderolen aus Karton die Holzwerkstoff-Paneele zusammenhalten.

Es ist als Vorteil der Karton-Verpackung anzusehen, dass diese mit dem darauf angebrachten Einleger mit einer vollständigen oder teilweisen Kunststoff-Umhüllung versehen werden kann. Eine solche Kombination von Verpackungsmaterialien ist -auch in dieser Abfolge- sinnvoll, weil eine Kunststoff-Folie als zusätzlicher Transportschutz wirkt und weil sie weiter den Eindruck einer hochwertigen Verpackung unterstreicht.

Details der Erfindung werden an einem Ausfültrungsbeispiel näher erläutert. Es zeigt:

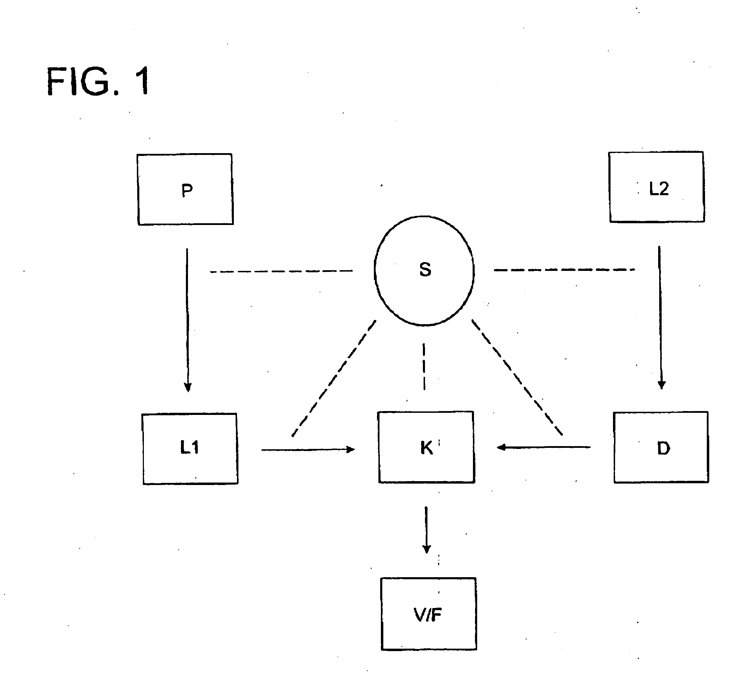

Fig. 1 eine schematische Darstellung der Lageranordnung.

In der Produktion P werden Holzwerkstoff-Paneele (Wand-, Decken- oder Fufibodenpaneele) hergestellt und nach der Herstellung in neutrale Kartons verpackt. Die Kartons werden durch eine Kombination von Förderbändern, Rollengängen und fahrerlosen Föderfahrzeugen sowie Liften in das erste Lager L₁ überführt. Die Steuerung der Mittel zum Fördern, die Vorgabe des Lagerorts im ersten Lager L₁ und das Registrieren des Lagerorts erfolgt durch die Mittel zum Steuern, hier ausgelegt als Rechner, der über eine an sich bekannte Kombination von Sendern und Empfängern die Mittel zum Fördern und die Mittel zum Drucken sowie die Arbeitsabläufe am Ort des Konfektionierens steuert. Ggf. wird auch die Komissionierung der vollständigen Aufträge für den Versand von diesem Rechner gesteuert.

Ein zweites Lager L2 ist mit Einlegern bevorratet, die ebenfalls noch neutral sind.

Geht bei dem Rechner S ein Auftrag für eine Lieferung von Holzwerkstoff-Paneelen ein, dann werden über die Mittel zum Fördern die im Auftrag spezifizierte Anzahl von Paneelen mit definierter Oberflächen- und Profilgestaltung an den Ort des Konfektionierens K gefördert. Aus dem zweiten Lager L₂ werden Einleger zu einer Druckvorrichtung D gefördert und dort mit dem Aufdruck versehen, der für diesen Lieferauftrag spezifiziert ist. Dabei kann es sich um einen Aufdruck mit einer Hersteller-Marke oder mit einer Kunden-Marke handeln, es können aber auch ohne Marken-Aufdruck allein produktbezogene Daten aufgebracht werden. Der Aufdruck erfolgt hier in der Weise, dass ein erster Abschnitt des Einlegers für die Stirnseite des Kartons bedruckt wird, während ein zweiter Abschnitt des Einlegers für die Oberseite des Kartons bedruckt wird.

Am Ort des Konfektionierens wird der bedruckte Einleger auf den Karton aufgebracht. Der für die Stirnseite bestimmte Abschnitt des Einlegers wird dort ausgerichtet, dann wird der Einleger gefaltet und der für die Oberseite vorgesehene, zweite Abschnitt des Einlegers wird auf der Oberseite des Kartons ausgerichtet. Nach diesem Beispiel wird der Einleger auf dem Karton abgelegt. Anschließend wird der Karton mit einer Schrumpffolie aus Kunststoff umhüllt, wodurch der Einleger auf dem Karton fixiert wird.

Die dem ersten Lager entnommenen und wie beschrieben konfektionierten Kartons werden dann für den Versand V bereitgestellt. Alternativ wird der konfektionierte Karton in ein Fertiglager F überführt.

## Patentansprüche

1. Lageranordnung mit
- einem ersten Lager (L1), das neutrale, einheitliche Kartons aufnimmt, die eine vorgegebene Anzahl von Holzwerkstoff-Paneelen bestimmter Produktqualität mindestens teilweise umschließen,
- einem zweiten Lager (L2), dass Einleger aufnimmt, die zum Anbringen auf den Kartons bestimmt sind,
- Mitteln zum Fördern, die jeweils das erste und das zweite Lager mit einem Ort (K) zum Konfektionieren der Kartons verbinden und mit
- Mitteln zum Steuern (S) der Mittel zum Fördern der Einleger und der Kartons, die so ausgelegt sind, dass sie im Betriebszustand für einzelne Kundenaufträge die Einleger und die Kartons so steuern, dass bedruckte Einleger auf vorgegebene Kartons aufgebracht werden und die mit bedruckten Einlegern versehenen Kartons an dem Ort zum Konfektionieren (K) nach den Vorgaben des Kundenauftrags zusammenstellen.

2. Lageranordnung nach Anspruch 1, **dadurch gekennzeichnet, daß** das zweite Lager (L2) vom Kunden gelieferte, bedruckte Einleger aufnimmt.

3. Lageranordnung mit
- einem ersten Lager (L1), das neutrale, einheitliche Kartons aufnimmt, die eine vorgegebene Anzahl von Holzwerkstoff-Paneelen bestimmter Produktqualität mindestens teilweise umschließen,
- einem zweiten Lager (L2), dass Einleger aufnimmt, die zum Anbringen auf den Kartons bestimmt sind,
- Mitteln (D) zum Bedrucken der Einleger,
- Mitteln zum Fördern die jeweils das erste (L1) und das zweite Lager (L2) mit einem Ort zum Konfektionieren (K) der Kartons verbinden und mit
- Mitteln zum Steuern (S) der Mittel (D) zum Bedrucken der Einleger und der Mittel zum Fördern, die so ausgelegt sind, dass sie im Betriebszustand für einzelne Kundenaufträge
- die Mittel (D) zum Bedrucken der Einleger und die
- Mittel zum Fördern von Kartons und Einlegern
so steuern, dass bedruckte Einleger auf vorgegebene Kartons aufgebracht werden und die mit bedruckten Einlegern versehenen Kartons an dem Ort zum Konfektionieren (K) nach den Vorgaben des Kundenauftrags zusammenstellen.

4. Lageranordnung nach Anspruch 3, **dadurch gekennzeichnet, dass** die Mittel (D) zum Bedrucken der Einleger am Ort des Konfektionierens (K) angeordnet sind.

5. Lageranordnung nach wenigstens einem der Ansprüche 1 bis 3, **dadurch gekennzeichnet, dass** die Einleger zum Aufkleben oder Aufheften auf den Karton mit Holzwerkstoff Paneelen ausgelegt sind.

6. Lageranordnung nach wenigstens einem der Ansprüche 1 bis 3, **dadurch gekennzeichnet, dass** die Einleger zum Anbringen am Karton mit Holzwerkstoff-Paneelen als Banderole ausgebildet sind.

7. Lageranordnung nach wenigstens einem der Ansprüche 1 bis 3, **dadurch gekennzeichnet, dass** eine Kunststoffhülle zum Anbringen des Einlegers am Karton mit Holzwerkstoff-Paneelen vorgesehen ist, die den Karton mindestens abschnittsweise umhüllt.

8. Lageranordnung nach wenigstens einem der Ansprüche 1 bis 3, **dadurch gekennzeichnet, dass** der Einleger derart bedruckt ist, dass er am Ort des Konfektionierens (K) so auf den Karton aufgebracht werden kann, dass ein erster Abschnitt eine Stirnseite des Kartons mindestens abschnittsweise überdeckt, und dass ein zweiter Abschnitt eine Oberseite des Kartons mindestens abschnittsweise überdeckt.

9. Lageranordnung nach wenigstens einem der Ansprüche 1 bis 3, **dadurch gekennzeichnet, dass** der Karton mindestens einen Ausschnitt aufweist, der eine Durchsicht auf die darin enthaltenen Holzwerkstoff-Paneele ermöglicht.

10. Lageranordnung nach wenigstens einem der Ansprüche 1 bis 3, **dadurch gekennzeichnet, dass** der Ort zum Konfektionieren (K) unmittelbar an eine Verladevorrichtung oder an ein Fertigwaren-Lager (F) angrenzt.

11. Lageranordnung nach wenigstens einem der Ansprüche 1 bis 3, **dadurch gekennzeichnet, dass** die Mittel zum Fördern als individuelle Fördermittel, insbesondere als Fahrzeuge oder als gebundene Fördermittel, insbesondere als Förderbänder, Rollen- oder Röllchenbahnen oder als Kombination hiervon ausgelegt sind.

12. Verpackungen mit Holzwerkstoff-Paneelen gleicher Produktqualität in einem standardisierten Karton, der jeweils eine vorgegebene Anzahl von Paneelen mindestens teilweise umschließt, wobei die einzelnen Kartons mit Einlegern verschiedener Anbieter versehen sind, die individuell nach Kundenvorgaben bedruckt sind hergestellt in einer Lageranordnung nach Anspruch 1-11.

13. Verpackungen nach Anspruch 12, **dadurch gekennzeichnet, dass** der Einleger auf dem Karton angeklebt, angeheftet oder nach Art einer Banderole aufgeschoben ist.

14. Verpackungen nach Anspruch 12, **dadurch gekennzeichnet, dass** der Karton mit dem darauf angebrachten Einleger mindestens abschnittsweise von einer Kunststoff-Folie umhüllt ist.

15. Verpackungen nach Anspruch 12, **dadurch gekennzeichnet, dass** der Karton mindestens einen Ausschnitt aufweist, der Sicht auf das darin enthaltene Holzwerkstoff-Paneel ermöglicht.

## Claims

1. Storage system comprising
- a first store (L1) which receives uniform unmarked boxes, which at least partially enclose a specified number of panels in wooden material of a specific product quality,
- a second store (L2) which receives inserts which are intended for attaching to the boxes,
- conveying means which respectively connect the first and the second store to a location (K) for assembling the boxes and comprising
- means for controlling (S) the means for conveying the inserts and the boxes which are designed such that, in the operating state, said means control the inserts and the boxes, for individual customer orders, such that printed inserts are applied to specified boxes and said means assemble the boxes provided with printed inserts at the assembling location (K) according to the requirements of the customer order.

2. Storage system according to Claim 1, **characterised in that** the second store (L2) receives printed inserts delivered by the customer.

3. Storage system comprising
- a first store (L1) which receives uniform unmarked boxes, which at least partially enclose a specified number of panels in wooden material of a specific product quality,
- a second store (L2) which receives inserts which are intended for attaching to the boxes,
- means (D) for printing the inserts,
- conveying means which respectively connect the first (L1) and the second store (L2) to a location (K) for assembling the boxes and comprising
- means for controlling (S) the means (D) for printing the inserts and the conveying means which are designed such that in the operating state said means control, for individual customer orders,
- the means (D) for printing the inserts and the
- means for conveying boxes and inserts
such that printed inserts are applied to specified boxes and said means assemble the boxes provided with printed inserts at the assembling location (K) according to the requirements of the customer order.

4. Storage system according to Claim 3, **characterised in that** the means (D) for printing the inserts are arranged at the assembling location (K).

5. Storage system according to at least one of Claims 1 to 3, **characterised in that** the inserts are designed for sticking or stapling to the box comprising panels in wooden material.

6. Storage system according to at least one of Claims 1 to 3, **characterised in that** the inserts for attaching to the box comprising panels in wooden material are configured as banderoles.

7. Storage system according to at least one of Claims 1 to 3, **characterised in that** a plastic sleeve is provided for attaching the insert to the box comprising panels in wooden material, which at least partially encloses the box.

8. Storage system according to at least one of Claims 1 to 3, **characterised in that** the insert is printed such that at the assembling location (K) it may be applied to the box such that a first portion at least partially covers a front face of the box and such that a second portion at least partially covers an upper face of the box.

9. Storage system according to at least one of Claims 1 to 3, **characterised in that** the box has at least one cutout which makes it possible to see through to the panels in wooden material contained therein.

10. Storage system according to at least one of Claims 1 to 3, **characterised in that** the assembling location (K) is directly adjacent to a loading device or to a store (F) for finished goods.

11. Storage system according to at least one of Claims 1 to 3, **characterised in that** the conveying means are designed as individual conveying means, in particular as vehicles or as interconnected conveying means, in particular as conveyor belts, roller conveyors or gravity wheel conveyors or as combinations thereof.

12. Packages comprising panels in wooden material of the same product quality in a standard box, which respectively at least partially encompasses a specified number of panels, the individual boxes being provided with inserts from different suppliers which are individually printed according to customer requirements, and produced in a storage system according to Claims 1 to 11.

13. Packages according to Claim 12, **characterised in that** the insert is stuck or stapled to the box, or slipped on in the manner of a banderole.

14. Packages according to Claim 12, **characterised in that** the box with the insert applied thereto is encased at least partially by a plastics film.

15. Packages according to Claim 12, **characterised in that** the box has at least one cutout which allows a view of the panels in wooden material contained therein.

## Revendications

1. Installation de stockage comprenant
- un premier entrepôt (L1) qui abrite des cartons neutres uniformes qui entourent au moins en partie un nombre prédéfini de panneaux en matériau en bois d'une qualité de produit déterminée,
- un second entrepôt (L2) qui abrite des encarts qui sont destinés à être appliqués sur les cartons,
- des moyens de convoyage qui relient respectivement le premier et le second entrepôt à un lieu (K) d'assemblage des cartons et comprenant
- des moyens pour commander (S) les moyens de convoyage des encarts et des cartons qui sont conçus de telle manière qu'ils commandent en état de fonctionnement les encarts et les cartons pour des commandes particulières de clients de telle manière que des encarts imprimés sont appliqués sur des cartons prédéfinis, et qui assemblent les cartons pourvus des encarts imprimés dans le lieu d'assemblage (K) selon les directives de la commande du client.

2. Installation de stockage selon la revendication 1, **caractérisée en ce que** le second entrepôt (L2) abrite des encarts imprimés fournis par le client.

3. Installation de stockage comprenant
- un premier entrepôt (L1) qui abrite des cartons neutres uniformes qui entourent au moins en partie un nombre prédéfini de panneaux en matériau en bois d'une qualité de produit déterminée,
- un second entrepôt (L2) qui abrite des encarts qui sont destinés à être appliqués sur les cartons,
- des moyens (D) pour imprimer les encarts,
- des moyens de convoyage qui relient respectivement le premier (L1) et le second entrepôt (L2) à un lieu d'assemblage (K) des cartons et comprenant
- des moyens pour commander (S) les moyens (D) pour imprimer les encarts et les moyens de convoyage qui sont conçus de telle manière qu'ils commandent en état de fonctionnement
- les moyens (D) pour imprimer les encarts et les
- moyens de convoyage des cartons et encarts
pour des commandes de clients particulières de telle manière que des encarts imprimés sont appliqués sur des cartons prédéfinis, et qui assemblent les cartons pourvus d'encarts imprimés dans le lieu d'assemblage (K) selon les directives de la commande du client.

4. Installation de stockage selon la revendication 3, **caractérisée en ce que** les moyens (D) pour imprimer les encarts sont disposés au lieu d'assemblage (K).

5. Installation de stockage selon au moins l'une des revendications 1 à 3, **caractérisée en ce que** les encarts sont conçus pour être collés ou agrafés sur le carton avec des panneaux en matériau en bois.

6. Installation de stockage selon au moins l'une des revendications 1 à 3, **caractérisée en ce que** les encarts à appliquer sur le carton avec des panneaux en matériau en bois sont constitués en tant que bande.

7. Installation de stockage selon au moins l'une des revendications 1 à 3, **caractérisée en ce qu'**une enveloppe de matière plastique est prévue pour appliquer l'encart sur le carton avec des panneaux en matériau en bois, qui enveloppe le carton au moins de manière partielle.

8. Installation de stockage selon au moins l'une des revendications 1 à 3, **caractérisée en ce que** l'encart est imprimé de telle manière qu'il peut être appliqué sur le carton dans le lieu d'assemblage (K) de telle sorte qu'une première section recouvre au moins de manière partielle une face frontale du carton et qu'une seconde section recouvre au moins de manière partielle une face supérieure du carton.

9. Installation de stockage selon au moins l'une des revendications 1 à 3, **caractérisée en ce que** le carton présente au moins une découpe qui permet de voir les panneaux en matériau en bois qui y sont renfermés.

10. Installation de stockage selon au moins l'une des revendications 1 à 3, **caractérisée en ce que** le lieu d'assemblage (K) avoisine directement une installation de chargement ou un entrepôt (F) de produits finis.

11. Installation de stockage selon au moins l'une des revendications 1 à 3, **caractérisée en ce que** les moyens de convoyage sont conçus en tant que convoyeurs individuels, en particulier en tant que véhicules ou en tant que convoyeurs raccordés, en particulier en tant que bandes transporteuses, transporteurs à rouleaux ou transporteurs à roulettes ou en tant que combinaison de ceux-ci.

12. Emballages avec des panneaux en matériau en bois de qualité de produit identique dans un carton standardisé qui entoure respectivement au moins en partie un nombre prédéfini de panneaux, les cartons particuliers étant pourvus d'encarts de fournisseurs différents qui sont imprimés de manière individuelle selon les directives des clients, réalisés dans une installation de stockage selon les revendications 1 à 11.

13. Emballages selon la revendication 12, **caractérisés en ce que** l'encart est collé, agrafé ou est glissé à la manière d'une bande sur le carton.

14. Emballages selon la revendication 12, **caractérisés en ce que** le carton est enveloppé avec l'encart appliqué sur lui au moins de manière partielle par un film en matière plastique.

15. Emballages selon la revendication 12, **caractérisés en ce que** le carton présente au moins une découpe qui permet de voir le panneau en matériau en bois qui y est renfermé.
